# EUROPEAN PATENT APPLICATION

(11) **EP 4 837 779 A1**
(43) Date of publication of application: **11.11.2026**
(21) Application number: 25174209.4
(22) Date of filing: 05.05.2025
(51) Int. Cl.: B60L 53/66, B60L 53/30, B60L 3/00

(54) **CHARGE BRIDGE MODULE FOR ELECTRIC VEHICLE SUPPLY EQUIPMENT (EVSE)**

(71) Applicant: Pionix GmbH, 76669 Bad Schönborn (DE)
(72) Inventor: Claussen, Cornelius, 76669 Bad Schönborn (DE)
(74) Representative: Schulz Junghans Patentanwälte PartGmbB

(57) **Abstract**

The present invention relates, inter alia, to a charge bridge module (1) for an electric vehicle supply equipment (EVSE) (2), comprising: a communication interface (11) configured to connect with a computer (5) of a supply equipment communication controller (SECC) (6) of the EVSE (2), multiple local ports (12) for connecting the charge bridge module (1) to power path peripheral devices (21, 22, 23, 24), wherein the charge bridge module (1) is configured to forward said local ports (12) via the communication interface (11) to the computer (5), and a microcontroller (10) configured to monitor the computer (5) and to execute a preprogrammed list of emergency commands upon detection of a predefined failure condition.

## Description

The present invention relates to a charge bridge module for electric vehicle supply equipment (EVSE), to EVSE, as well as to related methods.

EVSEs are critical in facilitating the transition to electric mobility by providing the necessary infrastructure for charging electric vehicles such as electric cars, buses, scooters, motorcycles, boats, planes, construction machines, farming equipment and the like. These systems can supply power to electric vehicles using alternating current (AC) or direct current (DC) and involve complex communication and power management protocols to ensure efficient and safe operation.

The current landscape of EVSE technology involves a variety of components and systems that must interact seamlessly to charge an electric vehicle effectively. The EVSE includes a central control unit denoted as the Supply Equipment Communication Controller (SECC), which manages communications with the electric vehicle, power grid interactions, and various safety and operational components within the power path. These components may include relays, contactors, power meters, insulation monitor devices (IMD), overvoltage detection systems, AC/DC converters, residual current detectors, and temperature sensors, among others.

A significant challenge in the design and implementation of EVSEs is the adherence to various regulatory standards across different regions, which dictate the specifics of electrical safety, metering compliance, cyber resilience, and interoperability. These standards affect the design of the connectors, the communication protocols used, and the overall architecture of the EVSE systems. For instance, different connectors like the newly standardized NACS (previously Tesla plug) and communication protocols such as DIN 70121 or ISO 15118 necessitate specific configurations and compliance measures.

The SECC itself is typically a complex assembly often comprising a dual-controller architecture, where a low-level microcontroller handles safety-critical and timing-sensitive tasks, and a high-level controller manages more complex operations such as user interactions and remote communications. This setup, while functional, leads to several issues in terms of software management, system certification, and hardware scalability. Each change in the software related to metering or safety requires re-certification, which is both time-consuming and costly. Moreover, the hardware design of SECCs is often customized to specific types of electric vehicles or charging standards, limiting the flexibility and increasing the cost of production.

In this regard the prior art reveals two primary difficulties, namely inflexibility and high cost and time effort of certification, as well as limited reusability and scalability.

Particularly, the need for frequent re-certification due to software updates in response to changing standards or operational requirements creates a bottleneck. This is particularly problematic where the software is deeply integrated into the system, affecting the ability to quickly adapt to new requirements or fix issues.

Furthermore, the hardware and software configurations in EVSEs are often tailored to specific standards or electric vehicle types. This specialization increases development risk, limits the reusability of the designs, and escalates costs, especially given the relatively low production volumes in some cases.

Based on the above, it is desirable to provide a technical solution that minimizes the need for re-certification by isolating complex software interactions from critical safety functions, thereby enhancing the flexibility and speed of software updates without compromising safety.

Furthermore, it is desirable to provide a modular and adaptable EVSE architecture that allows for easy reconfiguration to different electric vehicle communication standards or charging protocols without extensive hardware redesigns, thereby improving the scalability and economic efficiency of EVSE production and operation.

The first problem stated above is solved by a charge bridge module according to a first aspect of the present invention having the features of claim 1 as well as by a corresponding EVSE according to a second aspect of the present invention. Furthermore, the second problem stated above is solved by a charge bridge module according to a third aspect as stated in claim 9, an EVSE according to a fourth aspect as stated in claim 10 and a corresponding method according to a fifth aspect of the present invention as stated in claim 13.

Preferred embodiments of these aspects of the present invention are stated in the corresponding dependent claims and are also described below.

According to the first aspect of the present invention as claimed in claim 1, a charge bridge module is disclosed, comprising: a communication interface (e.g. USB / Ethernet) configured to connect with a computer of a supply equipment communication controller (SECC) of the EVSE, multiple local ports for connecting the charge bridge module to power path peripheral devices, and a microcontroller configured to forward said local ports via the communication interface to the computer, to monitor the computer, and to execute a pre-programmed list of emergency commands upon detection of a predefined failure condition of the computer. Particularly, in a preferred embodiment, the computer is a system-on-module (SoM), particularly a Linux SoM, wherein the computer is particularly arranged on a substrate (e.g. PCB) configured to be arranged on a substrate (e.g. PCB) of the SECC. However, in an alternative embodiment, routing via ethernet can be employed to facilitate communication between the charge bridge module and the computer (e.g. a standard industrial (particularly Linux) computer).

According to a preferred embodiment, the charge bridge module is configured to execute proxy firmware, which is storable therein, and is adapted to cooperate with device drivers executed on the computer, such that this configuration enables said ports managed by the charge bridge module to appear as local to the computer.

In another preferred embodiment, the predefined failure condition includes at least one of a failure of the computer, a failure signaled by the electric vehicle, a failure of a communication connection between the charge bridge module and the computer, a failure detected by the charge bridge module during a self- testing procedure of the charge bridge module, a failure detected by a device interfaced with the charge bridge module, particularly a temperature sensor

In a further preferred embodiment, the emergency commands include at least one of opening one or more switching elements (e.g. a relay, or a contactor) arranged in a power path to the electric vehicle, or deactivating a power supply of the EVSE configured to supply electrical energy to the electric vehicle.

In yet another preferred embodiment, the charge bridge module is configured to receive the pre-programmed list of emergency commands from the computer during a boot sequence of the computer.

In an additional preferred embodiment, each of said multiple local ports is configured to operate according to a communication protocol selected from the group consisting of: CAN, RS485, I2C, UART, GPIO.

According to a further preferred embodiment, each of said peripheral devices is selected from the group consisting of: relay, contactor, insulation monitoring device (IMD), power meter, power supply, temperature sensor. However, since the present invention allows to generally forwarding ports and blindly executing emergency commands, arbitrary peripheral devices are supported/can be used in the context of the present invention.

In another preferred embodiment, the charge bridge module is configured to be mechanically and electrically compatible with multiple types of EVSE without modification to the EVSE hardware.

According to the second aspect of the present invention an electric vehicle supply equipment (EVSE) for charging an electric vehicle is disclosed, comprising an SECC having a computer, particularly an SoM, particularly a Linux-SoM, and at least one charge bridge module according to the present invention (e.g. according to the first aspect or the third aspect of the present invention), wherein preferably the charge bridge module is configured to be exchanged with another charge bridge module, particularly to switch between different electric vehicle charging standards (see also below).

According to a further third aspect of the present invention, a charge bridge module is disclosed, wherein the charge bridge module comprises interface connectors configured to electrically (and particularly mechanically) connect with a base charge controller (having e.g. components arranged on a printed circuit board (PCB)) of an EVSE. Furthermore, the charge bridge module comprises communication circuitry adapted to facilitate communication between an electric vehicle and the EVSE according to a specific electric vehicle charging standard; wherein the charge bridge module is interchangeable on or with respect to the base charge controller to adapt the EVSE to different electric vehicle charging standards without requiring hardware modifications to the base charge controller.

Particularly, the base charge controller of the EVSE is designed to handle a wide range of tasks. It can be responsible for implementing all relevant vehicle communication protocols, managing communication with the Charge Point Management System (CPMS), and, where applicable, coordinating with payment terminals and the power grid. It may also perform load balancing in coordination with neighboring charge controllers. Additionally, it can conduct the coordination (state machine) between these various protocols and interfaces. Particularly, a codebase running on a computer of the base charge controller is thus significantly more extensive than that of a microcontroller of the charge bridge module. Particularly, the underlying principle is that, whenever feasible, complex functionality should be handled by the computer (e.g. Linux-based system), ensuring a centralized and flexible software architecture.

In a preferred embodiment, the charge bridge module comprises a plurality of contacts (e.g. pins or contacts of a card edge connector), each contact being configured to be electrically connected to a corresponding electrical connection of the base charge controller, wherein the base charge controller is configured to route said contacts via said electrical connections through to an electric vehicle connector via which the electric vehicle can be charged, wherein particularly said routing is conducted by the base charge controller without actively affecting signals transmitted through said electrical connections, thereby enabling the charge bridge module to control charging of an electric vehicle connected to the electric vehicle connector according to a predefined electric vehicle charging standard, and to change the electric vehicle charging standard to another one by exchanging the charge bridge module without requiring hardware modifications to the base charge controller. Particularly, the charge bridge module can be configured to be removably connected to the base charge controller or by way of soldering or welding (see also below).

In a preferred embodiment of the charge bridge module the specific charging standard is selected from the group consisting of: IEC 61851, IEC 62196-2 Type 2, SAE J1772 (Type 1), GB/T 20234.2, IEC 62196-3 Combo 2 (CCS2), SAE J3068, CCS Combo 1, NACS (Tesla), CHAdeMO, Bharat DC-001, GB/T 20234.3, ChaoJi (particularly a hybrid of GB/ 2023 and CHAdeMO 3.0)

Furthermore, a compatible communication protocol is preferably selected from the group consisting of ISO 15118, DIN 70121, CHAdeMO CAN protocol, Bharat CAN, and GB/T 27930 (CAN-based).

Particularly, for the individual regions one of the following AC or DC charging standards and associated protocols can be selected:
- Europe (EU): IEC 61851, IEC 62196-2 Type 2 for AC, IEC 62196-3 Combo 2 (CCS2) for DC (particularly ISO 15118, DIN 70121 as protocol).
- United Kingdom: IEC 61851, IEC 62196-2 Type 2 for AC, IEC 62196-3 Combo 2 (CCS2) for DC (particularly ISO 15118 as protocol).
- United States (USA): SAE J1772 (Type 1) for AC, SAE J3068, CCS Combo 1, NACS (Tesla) for DC (particularly DIN 70121, ISO 15118 as protocol).
- Canada: SAE J1772 (Type 1) for AC, CCS Combo 1, NACS for DC (particularly DIN 70121, ISO 15118 as protocol).
- Japan: SAE J1772 (Type 1) for AC, CHAdeMO for DC (particularly CHAdeMO CAN protocol as protocol).
- South Korea: SAE J1772 or IEC Type 1/2 for AC, CCS Combo 1 or Combo 2 for DC (particularly ISO 15118, DIN 70121 as protocol).
- China (Mainland): GB/T 20234.2 for AC, GB/T 20234.3 for DC (particularly GB/T 27930 (CAN-based) as protocol).
- India: IEC 61851, Type 2 for AC, Bharat DC-001 (legacy), moving to CCS2 for DC (particularly Bharat CAN, ISO 15118 as protocol).
- Australia: IEC 61851, Type 2 for AC, CCS Combo 2, CHAdeMO (minor) for DC (particularly ISO 15118 as protocol).
- New Zealand: IEC 61851, Type 2 for AC, CCS Combo 2, CHAdeMO for DC (particularly ISO 15118 as protocol).
- Singapore: IEC 61851, Type 2 for AC, CCS Combo 2 for DC (particularly ISO 15118 as protocol).
- United Arab Emirates (UAE): IEC 61851, Type 2 for AC, CCS Combo 2 for DC (particularly ISO 15118 as protocol).
- Israel: IEC 62196-2 Type 2 for AC, CCS Combo 2 for DC (particularly ISO 15118 as protocol).
- Norway: IEC 61851, Type 2 for AC, CCS Combo 2, CHAdeMO (legacy stations) for DC (particularly ISO 15118, DIN 70121 as protocol).
- Brazil: SAE J1772 (Type 1) for AC, CCS Combo 1, some Type 2 (AC) for DC (particularly ISO 15118 as protocol).
- Russia: IEC 61851, Type 2 for AC, CCS Combo 2, CHAdeMO (legacy) for DC (particularly ISO 15118 as protocol).
- South Africa: IEC 61851, Type 2 for AC, CCS Combo 2 for DC (particularly ISO 15118 as protocol).

According to the fourth aspect of the present invention, a system is disclosed, comprising a base charge controller (having e.g. components arranged on a printed circuit board (PCB)), a charge bridge module according to the invention being connected to the base charge controller; wherein the charge bridge module is configured to be exchanged with another charge bridge module to switch between different electric vehicle charging standards In a preferred embodiment of the system, the connection between the charge bridge module and the base charge controller is one of: a removable connection, a soldered or welded connection, a designed-in connection. Particularly, in a preferred embodiment, the removable connection is an M.2 connector, i.e., a removable connector, configured for electrically and mechanically connecting a mating module in accordance with the M.2 form factor (also known as NGFF), the connector comprises a plurality of contact terminals arranged to engage corresponding contact pads of the charge bridge module, and a mechanical retention feature allowing insertion and removal of the charge bridge module without soldering.

Particularly, for the purposes of the present invention, a removably connection or "removably connected" refers to a type of connection between two components where the connection allows for the components to be separated without destruction to the electrical connection or physical damage to the components themselves. This type of connection facilitates easy removal and replacement of components for maintenance, upgrading, or interchangeability purposes.

Particularly, a designed-in connection in the framework of the present invention is understood to be a permanent, intentional electrical interface that is integrated into the base charge controller's and charge bridge module's physical and circuit design from the outset, such that in particular the connection is not optional, particularly not user-configurable, and particularly not intended to be replaced or modified in the field.

According to a preferred embodiment, the base charge controller is configured to execute a computer program storable therein, said computer program comprising code to adapt the operation of the EVSE to a specific charging standard implemented by the charge bridge module.

According to the fifth aspect of the present invention, a method of adapting an EVSE to different charging standards is disclosed, the method comprising: providing a base charge controller (e.g. as in the fourth aspect), and connecting a charge bridge module according to claim 8 to the base charge controller to set the charging standard without altering the hardware of the base charge controller.

According to a preferred embodiment of the method, the charge bridge module connected to the base charge controller is a replacement charge bridge module that replaces a previously connected charge bridge module, thereby changing the charging standard without altering the hardware of the base charge controller.

Furthermore, in a preferred embodiment of the method, the latter further comprises modifying a computer program executable on a computer of the EVSE for operating the EVSE, wherein the modification includes at least one of updating the computer program, changing a configuration of the computer program, or replacing the computer program, to facilitate said change of the charging standard.

In certain preferred embodiments, the charge bridge module according to the first aspect comprises one or more features disclosed herein in connection with the charge bridge module of the third aspect. Similarly, preferred embodiments of the third aspect may incorporate features disclosed herein for the first aspect.

In the following, embodiments of the present invention as well further features and advantages and other aspects of the present invention shall be described with reference to the Figures, wherein
- Fig. 1: shows an electric vehicle supply equipment (EVSE) as known in the prior art for charging an electric vehicle,
- Fig. 2.: shows an embodiment of a charge bridge module according to the present invention applied to an EVSE,
- Fig. 3: shows a schematic diagram of an embodiment of a charge bridge module according to the present invention,
- Fig. 4: shows an embodiment of a connector of an embodiment of a charge bridge module according to the present invention,
- Fig. 5: shows an embodiment of an ESVE according to the present invention comprising multiple charge bridge modules according to the present invention, and
- Fig. 6: shows a further embodiment of an ESVE according to the present invention comprising multiple charge bridge modules according to the present invention

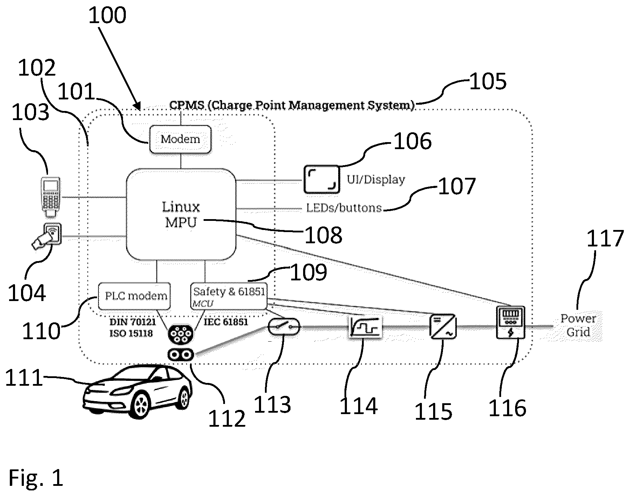

Fig. 1 shows a so-called electric vehicle supply equipment (EVSE) 100 as known in the prior art that is configured to charge an electric vehicle 111. Such a device 100 can supply an electric vehicle 111 with either AC or DC power. These devices 100 are colloquially also known as charging stations, superchargers, fast chargers, or wall boxes. In the context of AC charging, the actual charger is built into the car, known as the onboard charger, which converts AC to DC. However, the present invention particularly focusses on the external device.

Globally, different regulatory domains have developed various standards for connecting an EVSE to an electric vehicle (EV). For instance, the Tesla plug has recently been renamed to the NACS connector, standing for North American Charging Standard. These connectors include pins for power provision and data signal transmission. The communication method used on these pins is standardized according to the connector type, although different connectors may sometimes use the same communication standard (protocol), such as all AC versions running with ICE 61851. Additionally, one plug type can sometimes support multiple communication protocols or versions, such as CCS1/2 which can work with DIN 70121, ISO15118-2, and ISO15118-20. Each communication protocol comprises a complete communication stack, starting from the physical layer, which often involves technologies like CAN bus, Power Line Communication, simple Pulse Width Modulation (PWM), or a combination thereof.

The power path in these systems is designed to provide (or receive) energy via AC or DC, and is routed through the EVSE 100 into the electrical grid 117 or another local energy source or sink. Depending on the electric vehicle charging standard, this path includes various devices to convert the energy or ensure safe operation, such as relays 113, contactors, power meters 116, insulation monitoring devices (IMD) 115, overvoltage detection, AC/DC converters, grid and system protection devices, and residual current detectors (RCD).

Central to the EVSE 100 is the supply equipment communication Controller (SECC) 102, which in modern systems does more than just communicate with the electric vehicle 111. Its functions include managing the communication protocols, controlling components in the power path, interacting with human operators through interfaces like displays 106, buttons 107, as well as apps, and integrating with the power grid 117, home energy management systems, payment terminals 103, RFID readers 104, and remote connections to a Charge Point Management System (CPMS) 105 via protocols like the Open Charge Point Protocol (OCPP), and even a manufacturer's cloud.

SECCs 102 typically must adhere to four main classes of requirements that often conflict: metering compliance, electrical safety, cyber resilience, and interoperability. For metering and safety, compliance tests are stringent, and any software change could lead to costly and slow re-certification. This issue is mitigated by encapsulating the software in a minimalistic and small subcomponent of the EVSE 100, so only changes in this subset would trigger re-certification. For cyber resilience and interoperability, it is advantageous for most of the software to be outside of these minimal encapsulations to allow for quick iterations, reducing the attack surface of these encapsulations and potential need for frequent updates of them.

The power meter 115 is often a standalone unit and sometimes optional, making its separation in typical architectures beneficial. The remaining logic in modern SECC 102 architectures is split into two controller chips: a low-level controller built into a microcontroller 109 handles electrical safety tasks and those requiring fast and precise timing, running a very slim real-time OS like FreeRTOS or Zephyr OS with minimal code. The high-level controller 108, handling more complex tasks, requires a stronger chip and benefits from running on a full-scale embedded operating system, typically Linux-based.

Particularly, an SECC 102 comprises a printed circuit board (PCB) with numerous connectors for various components like ventilation, temperature sensors, the car plug 112, display 106, and more. It is usually designed for a specific number of electric vehicles 111 (e.g. cars) to be connected simultaneously and tailored to specific AC and/or DC applications and charging plug types. Due to this customization and use case, production volumes are varying a lot, ranging from a few hundreds to several hundred thousand units, which does not always justify deep integration of all components. Thus, components like the Linux computer 108 are often on a separate module, which can be soldered or plugged into the SECC 102, referred to as a system on a module (SoM). Similar modular approaches are used for communication modules 101, 110 through which the SECC 102 communicates with the CPMS and the electric vehicle 111.

With initiatives like the open-source project EVerest by the Linux Foundation Energy, the software stack on the MPU 108 has become exchangeable between different EVSE/SECC designs.

Despite these advancements, there remain several drawbacks. The SECC 102 contains a microcontroller 109 for low-level functionality, and its software is very specific to the used microcontroller and its peripherals, making the code little reusable. Additionally, even though the car interface and other components are often conceptually similar across different SECC designs, the related circuits are frequently redesigned, posing significant risks in development projects and later operations.

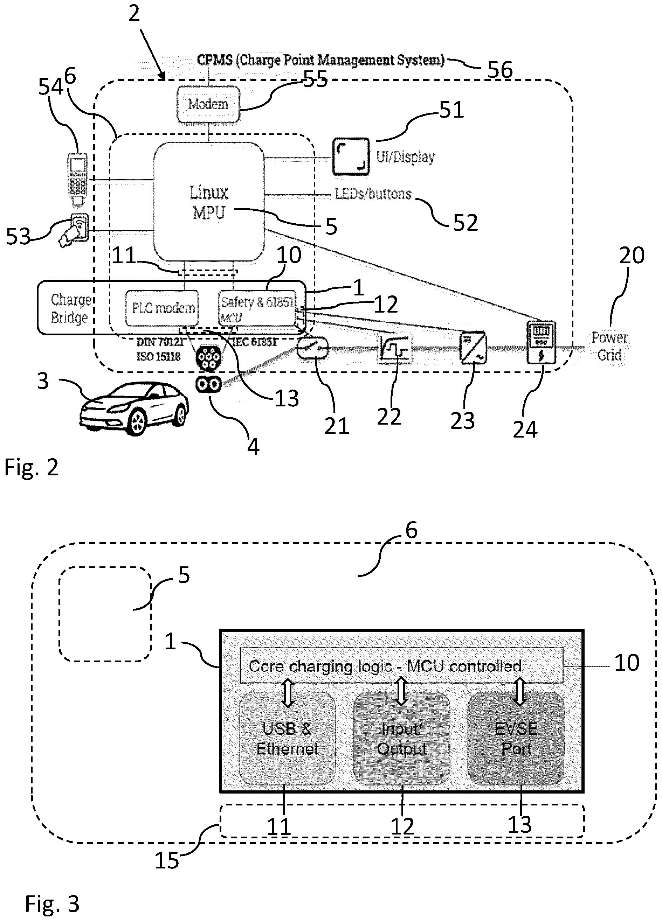

These difficulties are mitigated by the charge bridge module 1 for an EVSE 2 according to the present invention. An embodiment and application of such a charge bridge module 1 to an ESVE is shown in Fig. 2 in conjunction with Fig. 3 showing a functional layout of the charge bridge module 1 in a schematic fashion.

According thereto, the charge bridge module 1 comprises a communication interface 11 (e.g. USB or Ethernet) configured to connect with a computer 5 of a supply equipment communication controller (SECC) 6 of the EVSE (2) via a wired or wireless connection. Furthermore, the charge bridge module comprises a plurality of local ports 12 for connecting the charge bridge module 1 to power path peripheral devices 21, 22, 23, 24, wherein the charge bridge module 1 comprises a microcontroller 10 configured to forward said local ports 12 via the communication interface 11 to the computer 5. The microcontroller 10 is further configured to monitor the computer 5 and to execute a pre-programmed list of emergency commands upon detection of a predefined failure condition (e.g. as described herein).

Further, as indicated in Fig. 3, the communication interface 11 provides a simple connection to manage all other components and external hardware and facilitates piping of commands from SECC 6 (the operating system (e.g. Linux and EVerest or BaseCamp)) through the interface 11 (e.g. USB or Ethernet) to allow fast development. Furthermore, the ports 12 provide physical connections for the external components 21, 22, 23, 24 facilitating communication protocols such as CAN, RS485, I2C, UART, GPIO for providing safety relevant connections, switching relays, reducing power etc. Furthermore, the charge bridge module 1 provides an EVSE port 13 to the electric vehicle (plug 4) that can support e.g. one of CCS (Combined Charging System), MCS (Megawatt Charging System for heavy-duty EVs), CHAdeMO (Japanese DC fast charging standard), GB/T (Chinese AC/DC charging standard) and can further provide low-level signaling lines as e.g. defined in IEC 61851 such as CP (Control Pilot) and PP (Proximity Pilot) used in all modern EVs. Particularly PP identifies cable capacity and whether it's plugged in, while CP can be used for PWM signaling between electric vehicle 3 and EVSE 2 to indicate charger status, allow current draw, and transition between states (e.g., waiting → charging). The port 13 can further support low-level charging, i.e., charging without high-level digital communication (e.g., not using ISO 15118). The PWM signal on CP handles basic state transitions (e.g., connected, ready, charging), and current limitation info sent to the EV. Furthermore, via port 13 the PWM signal can be controlled to initiate communication with the electric vehicle 3. Further, CCS (Combined Charging System) can use Power Line Communication (PLC) over the CP line to carry high-level messages, wherein the PLC chip can enable ISO 15118 communication, plug & charge authentication, smart charging, and V2G (Vehicle-to-Grid).

Using the charge bridge module 1 according to the present invention in an ESVE 2 also allows the latter to function as expected and indicated in Fig. 2, wherein in turn the SECC 6 in conjunction with the charge bridge module 1 allows managing the communication protocols, controlling components in the power path, interacting with human operators through interfaces like displays 51, buttons 52, as well as apps, and integrating with the power grid 20, home energy management systems, payment terminals 54, RFID readers 53 and remote connections (e.g. communication interface 55) to a Charge Point Management System (CPMS) 56 via protocols like the Open Charge Point Protocol (OCPP), and even a manufacturer's cloud.

Particularly, the charge bridge module 1 according to the present invention advantageously facilitates to encapsulate all necessary components for a single connection to an electric vehicle (EV) 3, while offloading heavy computational tasks to a centralized computer 5. This computer 5 can be capable of managing multiple electric vehicles 3 simultaneously, thereby significantly reducing the complexity and extent of cabling required. Preferably, the computer 5 employs a manageable Linux-based software environment to handle complex software operations, enhancing overall system security, efficiency and reliability.

Due to the charge bridge module 1 incorporating a low-level microcontroller 10 the system's adaptability is significantly enhanced as it allows the charge bridge module 1 to be exchangeable if a different electric vehicle interaction is required.

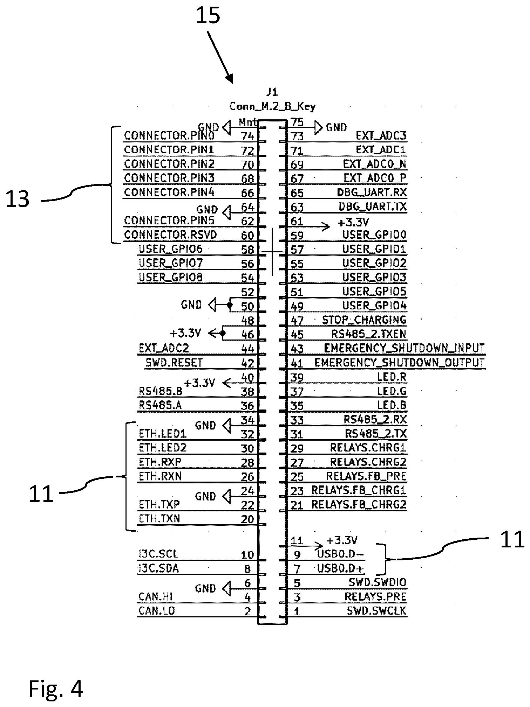

Particularly, when the charge bridge module is connected to the SECC 6 board, the latter can just route certain contacts (e.g. pins) of the charge bridge module 1 without any modification to an electric vehicle connector (e.g. socket) 4. An embodiment of the connection of the charge bridge module 1, in particular the EVSE Port 13, and the SECC 6 is shown in Fig. 4. If the electric vehicle related contacts are enough pins, just by changing the electric vehicle connector 4 for the electric vehicle 3 and replacing the charge bridge module 1 against another type as well as adapting or changing the software on the high-level (e.g. Linux) computer 5, the entire SECC 6 can be easily reconfigured from one electric vehicle charging standard to another one.

The design includes a sufficient number of pins, ensuring one spare pin beyond the maximum anticipated requirement for current and future car connectors, thereby future-proofing the system. Particularly, according to the embodiment shown in Fig. 4, seven pins (connector.pin0 to connector.pin5, and connector.RSVD) are provided to this end.

Particularly, it has been found that this is sufficient for every electric vehicle charging standard that exist worldwide for, for example, cars and trucks and those in the pipeline for standardization: IEC 61851, CCS1/2/NACS (DIN70121, ISO15118), CHAdeMO, ChaoJi, GB/T, MCS (EU version - with T1e), MCS (US version - with CAN). Additional spare pins can be provided in case there might be a need for them.

Particularly, to further minimize cabling, the charge bridge module 1 can be equipped with multiple communication interfaces such as CAN, RS485, I2C, UART, GPIO. Such interfaces allow for the local connection of power path peripherals (e.g. 21, 22, 23, 24) directly to the charge bridge module 1, thereby obviating the need for these interfaces on the computer 5. In other words, the charge bridge module 1 functions primarily as a port forwarder, invisibly relaying all local port activities e.g. via USB or Ethernet to the central (e.g. Linux) computer 5. The computer 5 of the SECC 6 is equipped with device drivers that simulate the presence of these ports locally, simplifying the charging logic by masking additional complexities.

However, the charge bridge module 1 can also serve as a standalone device for generating standard-specific electric vehicle interfacing signals, such as CP and PP signaling in compliance with ICE 61851 standards, and for managing bidirectional heartbeat signals to monitor system responsiveness. In the event of a failure in system communication, the microcontroller 10 is tasked with bringing the system to a safe state, a critical safety feature given the challenges associated with certifying complex (e.g. Linux) computer systems 5 for safety. The microcontroller's 10 understanding of its operational environment is enhanced by a set of "last wishes" commands provided by the computer 5, e.g. after each power cycle. These commands enable the microcontroller 10 to maintain operational safety by managing specific port messages in the event of system failures or external signals from the electric vehicle 3 indicating a problem. For example, the computer 5 can hand over the sequence of power-off commands (e.g., 1: opening relays 21, 2: turning off the power supply 24).

A particular advantage of the charge bridge module 1 is the fact that in certain embodiments its firmware is independent of any protocol changes over time.

In this way, the present invention provides a lightweight and inexpensive system that is future-proof for any protocol extensions, hardware agnostic since the charge bridge module 1 does not need to understand its environment, wherein the module 1 is safety certifiable without having the computer system 5 as a part of the safety-critical component.

Furthermore, the charge bridge module 1 can be configured for various use cases ranging from simple charging stations with one to four charge bridge modules connected via e.g. USB to a small (e.g. Linux) computer system 5, to more complex charge park layouts where multiple charging dispensers, each equipped with one or two charge bridge modules 1 are managed via e.g. Ethernet by a robust central (e.g. Linux) computer system. This configuration centralizes all software, facilitating orchestration of all charging sessions.

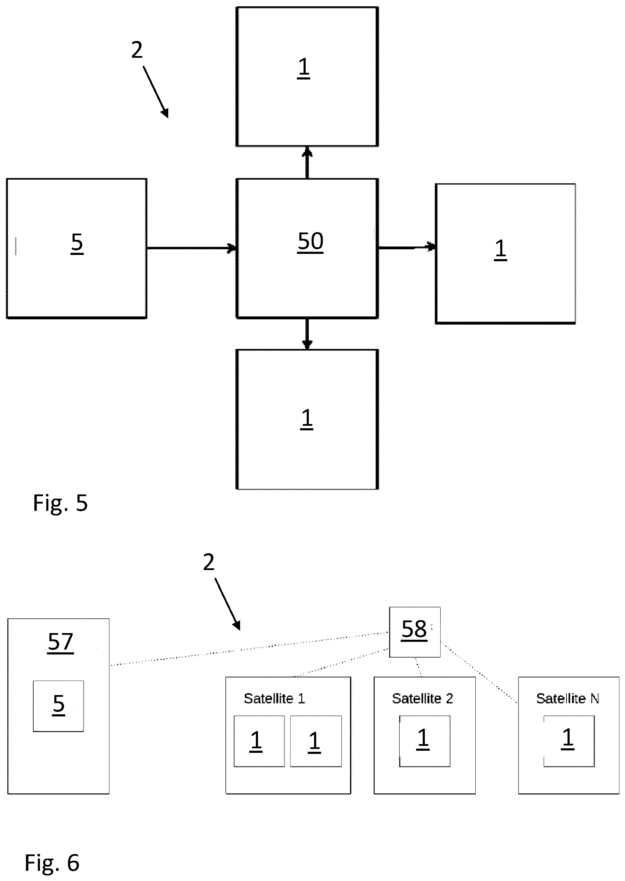

Particularly, Fig. 5 shows a use case of the first kind having one (e.g. Linux) computer 5 (e.g. SoM running BaseCamp running all ISO/OCPP etc. for all satellites 1) that connects via a USB switch 50 to the charge bridge modules 1 thus realizing an SECC for three plugs 4 with minimal effort and nearly no development time. Particularly, the computer 5 (e.g. Linux SoM) can be chosen according to needs and the charge bridge modules can be interchanged to cover multiple electric vehicle standards (e.g. 2xCCS, 1xMCS).

Furthermore, Fig. 6 shows a use case of the second kind comprising a e.g. a 19" (e.g. Linux) computer 5 in a separate rack 57 (e.g. based on BaseCamp running all ISO/OCPP etc. for all satellites 1 to N, wherein no specialized interfaces are needed, and a standard Intel based computer with one free ethernet interface can be used), wherein the computer 5 connects via an Ethernet switch 58 to multiple satellites 1 to N each comprising e.g. at least one or several charge bridge modules 1. This configuration is scalable to large installations of hundreds of satellites without the need of multiple computers 5. Costs can be further reduced by employing a centralized power supply unit. Also, here, the charge bridge modules can be interchanged to cover multiple electric vehicle charging standards (e.g. 2xCCS, 1xMCS).

## Claims

1. A charge bridge module (1) for an electric vehicle supply equipment (EVSE) (2), comprising:
- a communication interface (11) configured to connect with a computer (5) of a supply equipment communication controller (SECC) (6) of the EVSE (2),
- multiple local ports (12) for connecting the charge bridge module (1) to power path peripheral devices (21, 22, 23, 24), wherein the charge bridge module (1) is configured to forward said local ports (12) via the communication interface (11) to the computer (5), and
- a microcontroller (10) configured to monitor the computer (5) and to execute a pre-programmed list of emergency commands upon detection of a predefined failure condition.

2. The charge bridge module according to claim 1, wherein the charge bridge module (1) is configured to execute proxy firmware, which is stored therein, and is adapted to cooperate with device drivers executed on the computer (5), such that this configuration enables said local ports (12) to appear as local to the computer (5).

3. The charge bridge module according to claim 1 or 2, wherein the predefined failure condition includes at least one of:
- a failure of the computer (5),
- a failure signaled by the electric vehicle (3),
- a failure of a communication connection between the charge bridge module (1) and the computer (5),
- a failure detected by the charge bridge module during a self- testing procedure of the charge bridge module,
- a failure detected by a device connected to the charge bridge module, particularly a temperature sensor.

4. The charge bridge module according to one of the preceding claims, wherein the emergency commands include at least one of:
- opening one or more switching elements (21) arranged in a power path to the electric vehicle (3),
- deactivating a power supply (24) of the EVSE configured to supply electrical energy to the electric vehicle.

5. The charge bridge module according to one of the preceding claims, wherein the charge bridge module (1) is configured to receive the pre-programmed list of emergency commands from the computer (5) during a boot sequence of the computer (5).

6. The charge bridge module according to one of the preceding claims, wherein each of said multiple local ports (12) is configured to operate according to a communication protocol selected from the group consisting of: CAN, RS485, I2C, UART, GPIO.

7. The charge bridge module according to one of the preceding claims, wherein each of said peripheral devices (21, 22, 23, 24) is selected from the group consisting of: relay (21), contactor, insulation monitoring device (IMD) (22), power meter (23), power supply (24).

8. The charge bridge module according to one of the preceding claims, configured to be mechanically and electrically compatible with multiple types of EVSE (2) without modification to the EVSE hardware.

9. A charge bridge module (1) for an electric vehicle supply equipment (EVSE), comprising:
- interface connectors configured to mechanically and electrically connect with a base charge controller (6) of the EVSE (2);
- communication circuitry (11) adapted to facilitate communication between an electric vehicle and the EVSE (2) according to a specific charging standard;
- wherein the charge bridge module (1) is configured to allow the EVSE (2) to support different electric vehicle charging standards by replacing the charge bridge module (1) itself without requiring hardware modifications to the base charge controller (6).

10. An electric vehicle supply equipment (EVSE) for charging an electric vehicle (3), comprising:
- a base charge controller,
- a charge bridge module (1) according to claim 9 being connected to the base charge controller (6);
- wherein the charge bridge module (1) is configured to be exchanged with another charge bridge module (1) to switch between different electric vehicle charging standards.

11. The electric vehicle supply equipment according to claim 10, wherein the connection between the charge bridge module (1) and the base charge controller (6) is selected from the group consisting of: removably connected, soldered, designed in.

12. The vehicle charging system according to claim 10 or 11, wherein the base charge controller (6) is configured to execute a computer program stored therein, said computer program comprising code to adapt the operation of the EVSE (2) to a specific electric vehicle charging standard implemented by the charge bridge module (1).

13. A method of adapting an EVSE to different electric vehicle charging standards, the method comprising:
- providing a base charge controller (6), and
- connecting a charge bridge module (1) according to claim 9 to the base charge controller (6) to set the electric vehicle charging standard without altering the hardware of the base charge controller (6).

14. The method of claim 13, wherein the charge bridge module (1) connected to the base charge controller (6) is a replacement charge bridge module (1) that replaces a previously connected charge bridge module (1), thereby changing the electric vehicle charging standard without altering the hardware of the base charge controller (6).

15. The method according to claim 13 or 14, further comprising modifying a computer program executable on a computer (5) of the EVSE (2) for operating the EVSE (2), wherein the modification includes at least one of updating the computer program, changing a configuration of the computer program, or replacing the computer program, to facilitate said change of the charging standard.
